# EUROPEAN PATENT APPLICATION

(11) **EP 2 685 634 A1**
(43) Date of publication of application: **15.01.2014**
(21) Application number: 12754462.5
(22) Date of filing: 01.03.2012
(51) Int. Cl.: H04B 1/10, H04J 11/00, H04N 5/44, H04N 7/173

(54) **RECEPTION DEVICE, RECEPTION METHOD, AND PROGRAM**

(30) Priority: 10.03.2011 JP 2011053063
(71) Applicant: Sony Corporation, Tokyo 108-0075 (JP)
(72) Inventor: YOKOKAWA Takashi, Tokyo 108-0075 (JP); GOTO Yuken, Tokyo 108-0075 (JP); TAKAHASHI Hiroo, Tokyo 108-0075 (JP)
(74) Representative: Beder, Jens
(86) International application number: PCT/JP2012/055233
(87) International publication number: WO 2012/121103

(57) **Abstract**

The present technology relates to a reception device, a reception method, and a program therefor that enable improvement in reception performance when information on a frequency band in which no data is transmitted is known. The reception device receives a broadcast wave of an OFDM signal transmitted from a transmission device at a broadcast station that is not shown. A transmission parameter interpretation unit acquires band information indicating a "no signal" band contained in transmitted control information. An interference rejection filter unit performs filtering at least when a signal with a level higher than a predetermined level is detected on the basis of the band information from the transmission parameter interpretation unit. The disclosed technology can be applied to a reception device that receives OFDM signals, for example.

## Description

### TECHNICAL FIELD

The present technology relates to a reception device, a reception method, and a program therefor, and more particularly, to a reception device, a reception method, and a program therefor that enable improvement in reception performance when information on a frequency band in which no data is transmitted is known.

### BACKGROUND ART

Filtering has often been used as a technique for reducing interference signals. For example, in a case where the interference signals are signals of adjacent channels adjacent to a receiving channel, a band-pass filter or a low-pass filter can be employed to reduce adjacent channel signals. As a result, the influence of adjacent channel signals leaking into the reception frequency band can be suppressed.

Furthermore, in a case where the interference signals are continuous waves (sine waves, for example) existing in a specific frequency range or signals for analog communication existing in the same channel, for example, a notch filter can be employed. Attention should be paid, however, to application of a filter since incorrect application of a filter to a desired signal to be received may result in suppression of even the signal to be received and lead to degradation in performance.

Recent progress in technologies for digitalization of broadcasting systems is remarkable. In terrestrial television broadcasting systems in Japan and Europe, a modulation technique called the OFDM (orthogonal frequency division multiplexing) system that is less affected by multipath interference is employed.

The OFDM system is also employed in broadcasting systems for cable broadcasting in Europe. The DVB-C2 that is a second generation European digital cable broadcasting standard defines that no data is transmitted and a signal is transmitted at a transmission power of zero in a specific frequency band so that interference with other communications is prevented (refer, for example, to Non-Patent Document 1).

### CITATION LIST

### NON-PATENT DOCUMENT

NON-PATENT DOCUMENT 1: Digital Video Broadcasting (DVB); Frame structure channel coding and modulation for a second generation digital transmission system for cable systems (DVB-C2), DVB Document A138

### SUMMARY OF THE INVENTION

### PROBLEMS TO BE SOLVED BY THE INVENTION

When information on such a frequency band in which no data is transmitted is known, it is desired to appropriately perform filtering by using the information to improve reception performance.

The present technology has been made in view of these circumstances, and is to improve reception performance when information on a frequency band in which no data is transmitted is known.

### SOLUTIONS TO PROBLEMS

A reception device according to one aspect of the present technology includes: an acquiring unit configured to acquire band information indicating a "no signal" band contained in transmitted control information; and a filtering unit configured to perform filtering when at least a signal with a level higher than a predetermined level is detected on the basis of the band information.

A reception method according to one aspect of the present technology includes: acquiring band information indicating a "no signal" band contained in transmitted control information; and performing filtering when at least a signal with a level higher than a predetermined level is detected on the basis of the band information.

A program according to one aspect of the present technology is to cause a computer to function as: an acquiring unit configured to acquire band information indicating a "no signal" band contained in transmitted control information; and a filtering unit configured to perform filtering when at least a signal with a level higher than a predetermined level is detected on the basis of the band information.

According to one aspect of the present technology, band information indicating a "no signal" band contained in transmitted control information is acquired, and filtering is performed at least when a signal with a level higher than a predetermined level is detected on the basis of the acquired band information.

Note that the program can be provided by being transmitted via a transmission medium or by being recorded in a recording medium.

The reception device may be an independent device or may be an internal block of a device.

### EFFECTS OF THE INVENTION

According to one aspect of the present technology, reception performance can be improved when information on a frequency band in which no data is transmitted is known.

### BRIEF DESCRIPTION OF DRAWINGS

Fig. 1 is a block diagram showing an example structure of an embodiment of a reception device to which the present technology is applied. Fig. 2 is a diagram showing an example of a DVB-C2 signal.
Fig. 3 is a diagram showing a structure of a C2 frame.
Fig. 4 is a diagram showing a structure of a C2 frame when a narrowband notch exists.
Fig. 5 is a graph showing an example of a frequency spectrum of a DVB-C2 signal in which a narrowband notch exists.
Fig. 6 is a diagram showing a structure of a C2 frame when a broadband notch exists.
Fig. 7 is a flowchart for explaining a notch band adaptive filter setting process.
Fig. 8 is a flowchart for explaining a reception process.
Fig. 9 is a diagram for explaining filtering performed by an interference rejection filter unit.
Fig. 10 is a diagram for explaining filtering performed by the interference rejection filter unit.
Fig. 11 is a diagram for explaining a second reception process.
Fig. 12 is a diagram for explaining the second reception process.
Fig. 13 is a flowchart for explaining the second reception process.
Fig. 14 shows graphs for explaining examples of the signal level to be compared with a threshold.
Fig. 15 is a block diagram showing an example structure of an embodiment of a computer to which the present technology is applied.

### MODES FOR CARRYING OUT THE INVENTION

### [Example Structure of Reception Device]

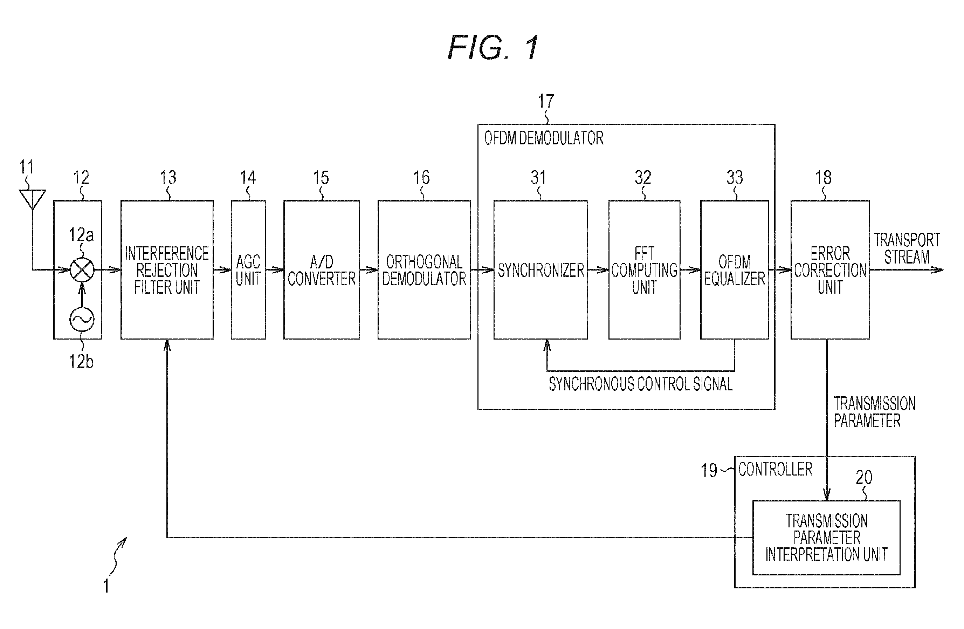

Fig. 1 shows an example structure of an embodiment of a reception device to which the present technology is applied.

The reception device 1 of Fig. 1 is an OFDM reception device configured to receive a broadcast wave of an OFDM signal transmitted from a transmission device at a broadcast station that is not shown.

An antenna 11 receives the transmitted broadcast wave (RF signal) of the OFDM signal and outputs the broadcast wave to a tuner 12.

The tuner 12 includes an arithmetic operation unit 12a and a local oscillator 12b.

The arithmetic operation unit 12a multiplies the RF signal from the antenna 11 and a signal from the local oscillator 12b together to convert the frequency of the RF signal to obtain an IF (intermediate frequency) signal, and outputs the IF signal to an interference rejection filter unit 13. The local oscillator 12b generates a sinusoidal signal of a predetermined frequency and outputs the signal to the arithmetic operation unit 12a.

The interference rejection filter unit 13 receives band information indicating a band in which the OFDM signal is "no signal" supplied from a transmission parameter interpretation unit 20. In other words, the signal received in a band indicated by the band information supplied from the transmission parameter interpretation unit 20 is an interference signal that is not desired to be received, and the band information is information indicating a frequency band in which an interference signal may exist. The interference rejection filter unit 13 performs filtering to remove the interference signal in the frequency band on the basis of the band information supplied from the transmission parameter interpretation unit 20. Specifically, the interference rejection filter unit 13 performs filtering on a frequency band specified by the transmission parameter interpretation unit 20 by using a band-pass filter or a notch filter, and outputs the IF signal resulting from the filtering to an AGC unit 14.

The AGC (automatic gain control) unit 14 performs gain control on the IF signal from the interference rejection filter unit 13 so that the signal level is kept constant. The AGC unit 14 outputs the IF signal resulting from the gain control to an A/D converter 15.

The A/D converter 15 performs A/D conversion on the IF signal from the AGC unit 14, and outputs the digital IF signal to an orthogonal demodulator 16.

The orthogonal demodulator 16 performs orthogonal demodulation on the IF signal from the A/D converter 15 by using a carrier having a predetermined frequency, and outputs a baseband OFDM signal to an OFDM demodulator 17. The baseband OFDM signal output from the orthogonal demodulator 16 will hereinafter be referred to as an OFDM time domain signal. The OFDM time domain signal is a complex signal having a real axis component (I component) and an imaginary axis component (Q component) as a result of the orthogonal demodulation.

The OFDM demodulator 17 includes a synchronizer 31, an FFT computing unit 32, and an OFDM equalizer 33.

The synchronizer 31 synchronizes OFDM symbols that are units of signal transmission in the OFDM system. Specifically, the synchronizer 31 determines the start position of an FFT interval that is a signal period during which FFT is performed by the FFT computing unit 32. While the synchronizer 31 can determine the start position of an FFT interval on the basis of the OFDM time domain signal before the FFT, the synchronizer can determine the start position of an FFT interval on the basis of an equalized signal obtained by correcting distortion in the transmission path after equalization is performed by the OFDM equalizer 33. In this case, a synchronous control signal determined on the basis of the equalized signal obtained by correcting the distortion in the transmission path is supplied from the OFDM equalizer 33.

The FFT computing unit 32 sets an interval having an effective symbol length from the start position of the FFT interval determined by the synchronizer 31 as the FFT interval in the OFDM time domain signal from the orthogonal demodulator 16. The FFT computing unit 32 then extracts the signal of the FFT interval from the OFDM time domain signal, and performs FFT computation on the extracted signal. As a result of the FFT computation by the FFT computing unit 32, data transmitted on a subcarrier, that is, an OFDM signal representing a transmission symbol on an IQ plane can be obtained. The OFDM signal obtained by the FFT computation of the OFDM time domain signal is a signal in the frequency domain, and the OFDM signal resulting from the FFT computation will hereinafter be referred to as an OFDM frequency domain signal as appropriate.

The OFDM equalizer 33 equalizes the OFDM frequency domain signal resulting from the FFT computation so that the amplitude and the phase of the received signal become equal to those of the transmitted signal, and outputs the resulting equalized signal.

In the OFDM system in which a QAM based modulation technique is used as the modulation technique for each subcarrier, the amplitude and the phase are different from those when the signal is transmitted depending on the carrier owing to the influence of multipath or the like during transmission. For example, the influence of multipath is caused by reflection by mountains and buildings and SFNs (single frequency networks).

In the OFDM system, a known signal having a predetermined amplitude and a predetermined phase is discretely inserted as a pilot signal between transmission symbols. At the receiver side, the frequency characteristic of the transmission path is obtained on the basis of the amplitude and the phase of the pilot signal and the received signal is equalized.

An error correction unit 18 performs de-interleaving on the equalized signal supplied from the OFDM equalizer 33, and further performs processing such as de-puncturing, Viterbi decoding, spread signal removal, and RS decoding thereon. The error correction unit 18 outputs the decoded data (transport stream) obtained by performing various processes to an external output unit or an output buffer downstream thereof.

The error correction unit 18 also outputs various transmission parameters out of the decoded data resulting from the processing such as de-interleaving and error correction as transmission control information to the transmission parameter interpretation unit 20 of a controller 19.

The controller 19 controls respective components in the reception device 1. For example, the controller 19 sets the reception frequency according to a receiving channel set by an operation unit that is not shown. Specifically, the oscillation frequency of the local oscillator 12b is set so that a predetermined frequency according to the reception frequency is generated by the local oscillator 12b.

In addition, the controller 19 includes the transmission parameter interpretation unit 20 that interprets the transmission parameters supplied from the error correction unit 18 and supplies necessary information to the components of the reception device 1 as appropriate.

For example, transmission parameter interpretation unit 20 acquires band information indicating a "no signal" band among frequency bands that can be received by the reception device 1. The transmission parameter interpretation unit 20 then supplies the acquired band information to the interference rejection filter unit 13.

When a frequency band in which no signal is transmitted exists in a received OFDM signal and the information on the band can be acquired as a transmission parameter, the reception device 1 having the structure as described above can improve reception performance by performing filtering on the received OFDM signal on the basis of the information.

Accordingly, a reception process performed by the reception device 1 will be described with reference to the DVB-C2 that is a second generation European digital cable broadcasting standard as an example of a case where a frequency band in which no signal is transmitted exists in the received OFDM signal and the information thereon can be acquired as a transmission parameter.

### [Signal according to DVB-C2]

First, a signal according to the DVB-C2 (hereinafter also referred to as a DVB-C2 signal) will be described.

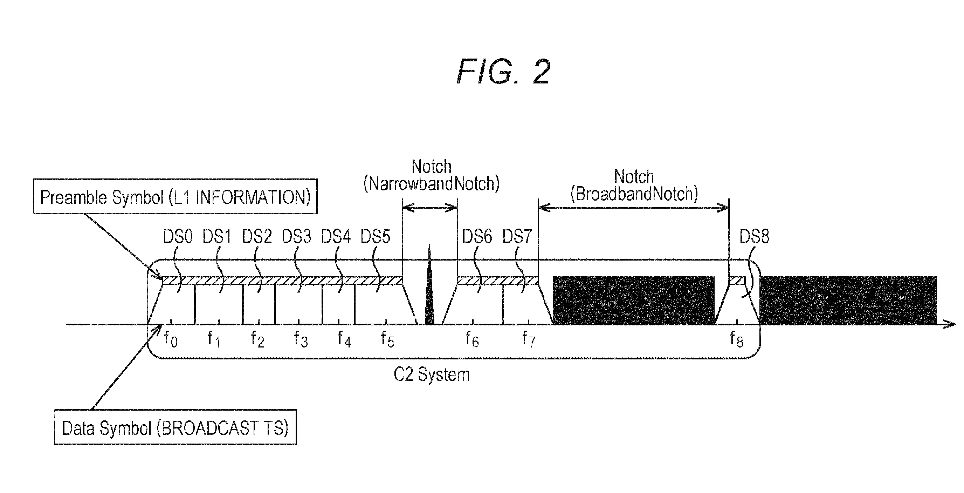

Fig. 2 is a diagram showing an example of the DVB-C2 signal. The horizontal axis in Fig. 2 represents frequency. One signal according to the DVB-C2 is referred to as a C2 system and includes preamble symbols and a data symbols. According to the standard, one C2 system is a signal with a maximum bandwidth of about 3.5 GHz.

A preamble symbol is a symbol used for transmission of L1 information (L1 signaling part 2 data) that is transmission control information. Information on a frequency band in which no signal is transmitted is transmitted as part of the L1 information. The same information is repeatedly transmitted at 3408 carrier cycles (3408 subcarrier cycles in the OFDM) by using the preamble symbols. Note that 3408 carriers correspond to a frequency band of 7.61 MHz.

A data symbol is a symbol used for transmission of a TS (transport stream) such as program data. A data symbol is divided into blocks called data slices. For examples, data of different programs are respectively transmitted on a data slice 1 (DS1) and a data slice 2 (DS2). Parameters relating to the data slices such as the number of data slices are also contained in the L1 information.

Frequency bands shown in black in Fig. 2 are frequency bands used for FM broadcasting, police radio broadcasting, military radio broadcasting and the like that are not used for transmission of the C2 system. Thus, the frequency bands shown in black are "no signal" bands of the transmitted signal output by the transmission device in the C2 system and are called notch bands.

Notch bands include narrowband notches with a bandwidth smaller than 48 subcarriers and broadband notches with a bandwidth larger than 47 subcarriers (equal to or larger than 48 subcarriers).

Information on notch bands such as the number of notches and the bandwidths of the respective notch bands is contained as transmission parameters in the L1 information that is transmission control information.

### [Structure of C2 Frame]

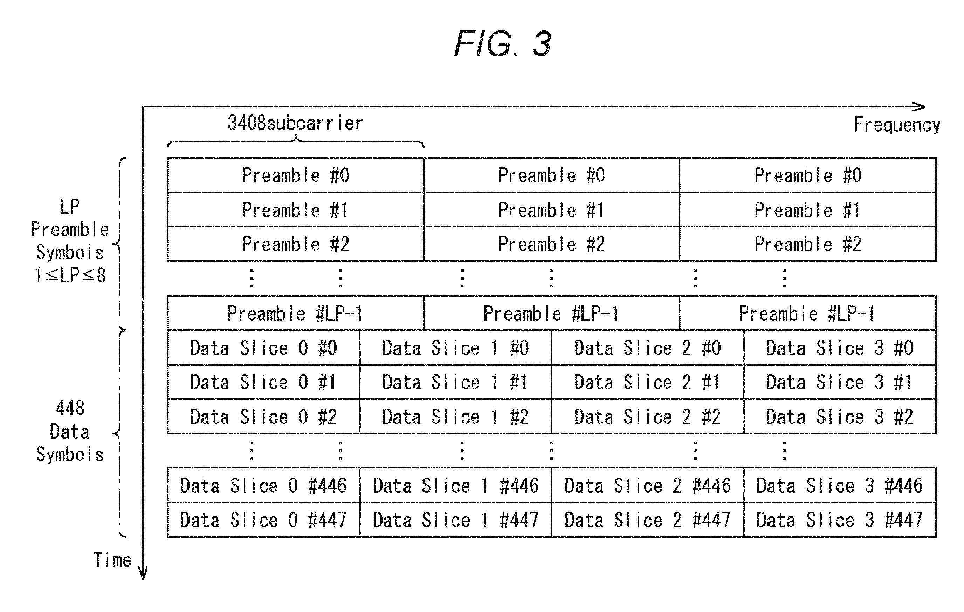

Fig. 3 is a diagram showing a structure of a C2 frame. The C2 frame includes at least one preamble symbol and a plurality of data symbols. The horizontal axis in Fig. 3 represents frequency and the vertical axis therein represents time (symbol).

The preamble symbol is repeatedly transmitted at 3408 subcarrier cycles during one to eight symbols as viewed in the time direction. Blocks of the preamble symbols designated by the same reference numerals in Fig. 3 represent preamble symbols used for transmission of the same L1 information.

Furthermore, following a preamble symbol, data symbols are transmitted during 448 symbols as viewed in the time direction. In the example of Fig. 3, data of data slices 0 to 3 are each transmitted by using 448 data symbols.

### [Narrowband Notch]

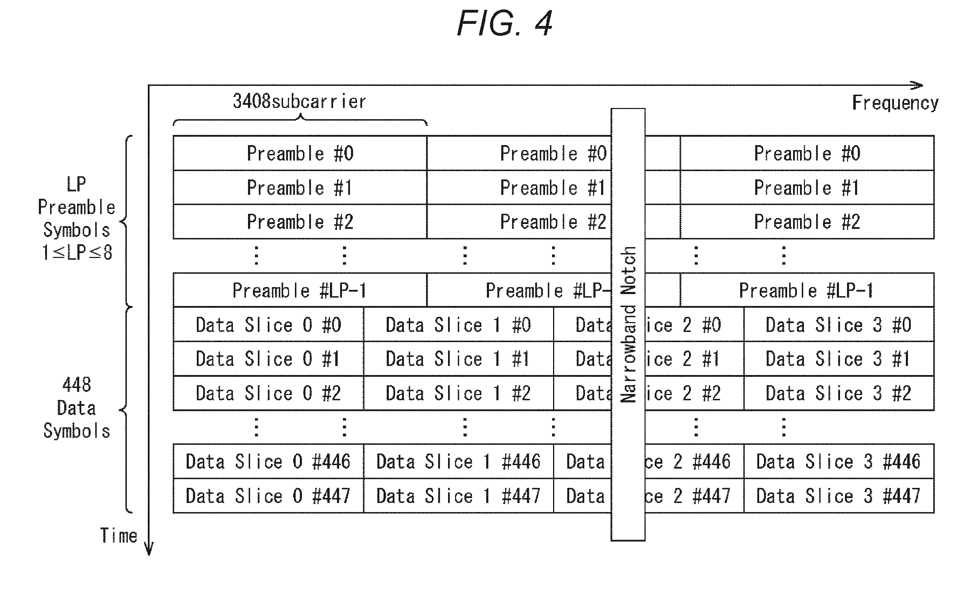

Fig. 4 shows a structure of a C2 frame when a narrowband notch exists.

The bandwidth of a narrowband notch is smaller than 48 subcarriers, and it is defined that there is one narrowband notch in 3408 subcarriers. Notch bands of data symbols do not contain data, and the L1 information of preamble symbols in the notch bands can be acquired (restored) by error correction.

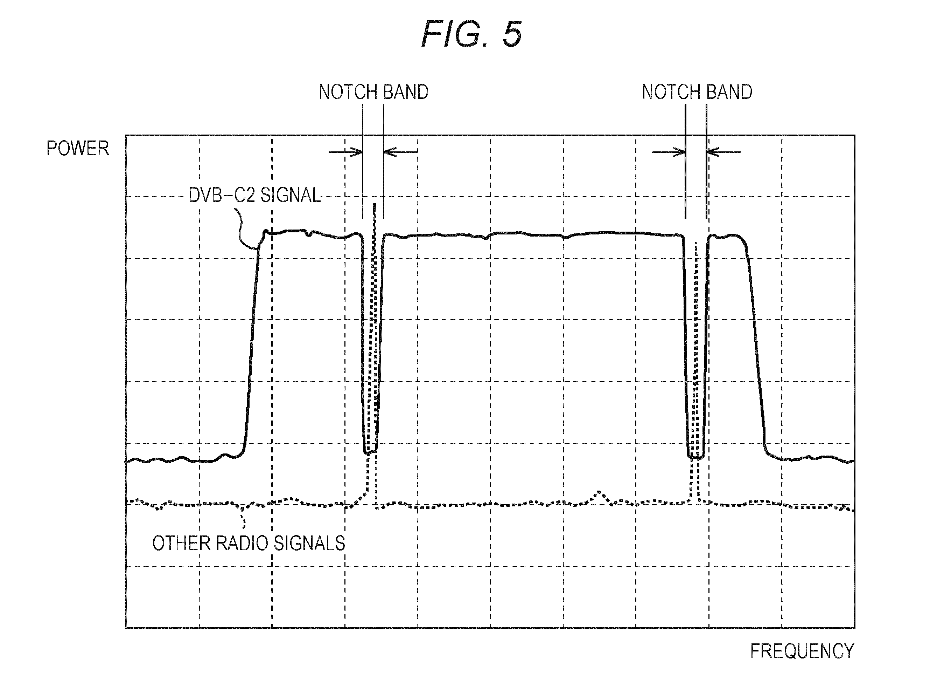

Fig. 5 shows an example of a frequency spectrum of a DVB-C2 signal in which a narrowband notch exists.

As shown in Fig. 5, in bands used by other radio signals, that is, bands where the powers (power levels) of other radio signals are high, the power of the DVB-C2 signal is low. Signals that are not the DVB-C2 signal are all interference signals for the reception device 1.

### [Broadband Notch]

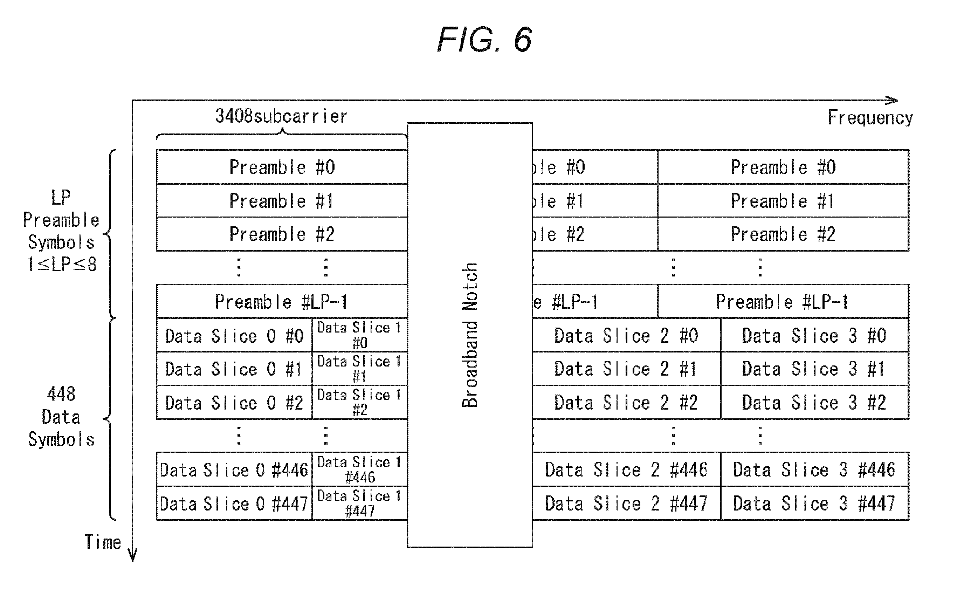

Fig. 6 is a diagram showing a structure of a C2 frame when a broadband notch exists.

The bandwidth of a broadband notch is larger than 47 subcarriers, a broadband notch is arranged between two data slices. Furthermore, broadband notches are arranged with an interval of 3408 subcarriers or larger. Thus, the notch bands do not contain the L1 information of preamble symbols nor data of data symbols.

In the DVB-C2, as described above, it is not necessary to provide guard intervals between channels and a relatively narrow band between notches can also be used for data transmission, which allows efficient use of frequency bands. The reception device 1 receives sets a reception frequency band with a maximum bandwidth of 7.61 MHz corresponding to 3408 subcarriers, receives signals within the range, decodes the L1 information, and thereafter decodes program data on the basis of the decoded L1 information.

### [Notch Band Adaptive Filter Setting Process]

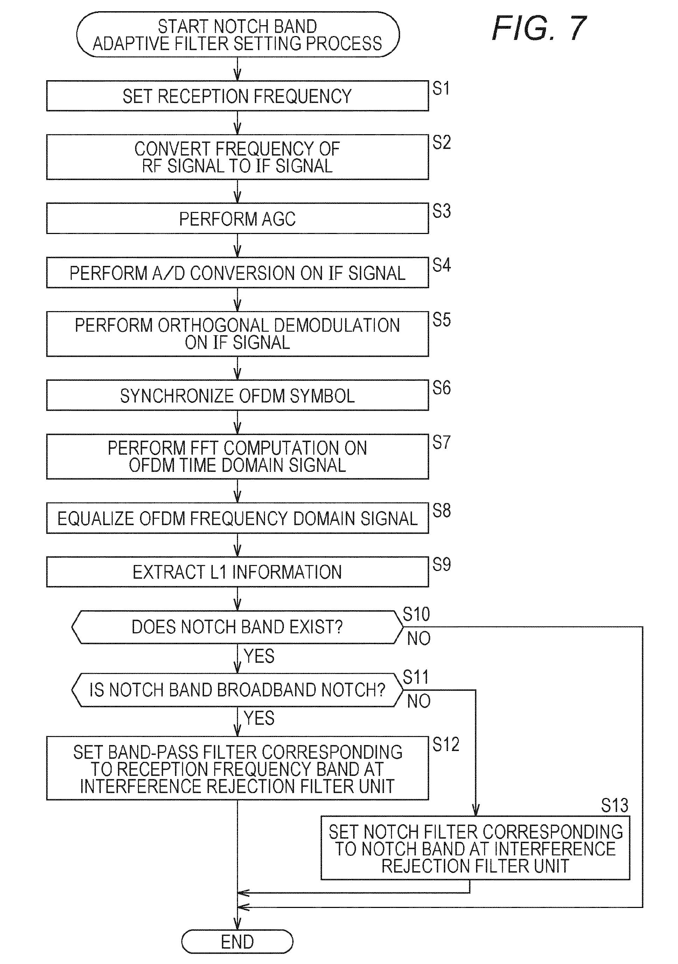

A notch band adaptive filter setting process performed by the reception device 1 will be described with reference to the flowchart of Fig. 7. This process is a process for setting a filter of the interference rejection filter unit 13 on the basis of the information on notch bands contained in the L1 information.

First, in step S1, the controller 19 sets the reception frequency according to the receiving channel set by the operation unit that is not shown. As a result, the center frequency and the reception bandwidth according to the receiving channel are set.

In step S2, the tuner 12 converts the frequency of the RF signal received by the antenna 11 to obtain an IF signal and outputs the IF signal. The IF signal output from the tuner 12 is supplied to the AGC unit 14 via the interference rejection filter unit 13.

In step S3, the AGC unit 14 performs AGC on the supplied IF signal. Specifically, the AGC unit 14 performs gain control so that the signal level of the IF signal is kept constant, and outputs the IF signal resulting from the control to the A/D converter 15.

In step S4, the A/D converter 15 performs A/D conversion on the IF signal from the AGC unit 14, and outputs the digital IF signal to the orthogonal demodulator 16.

In step S5, the orthogonal demodulator 16 performs orthogonal demodulation on the IF signal from the A/D converter 15 by using a carrier having a predetermined frequency, and outputs the OFDM time domain signal to the OFDM demodulator 17.

In step S6, the synchronizer 31 of the OFDM demodulator 17 synchronizes the OFDM symbol. Specifically, the synchronizer 31 determines the start position of an FFT interval that is a signal period during which FFT computation is performed by the FFT computing unit 32. Information on the determined start position of the FFT interval is supplied to the downstream FFT computing unit 32.

In step S7, the FFT computing unit 32 performs FFT computation on the OFDM time domain signal. More specifically, the FFT computing unit 32 sets an FFT interval on the basis of the start position of the FFT interval determined by the synchronizer 31, and extracts the signal of the FFT interval from the OFDM time domain signal. The FFT computing unit 32 then performs FFT computation on the extracted OFDM time domain signal.

In step S8, the OFDM equalizer 33 equalizes the OFDM frequency domain signal resulting from the FFT computation so that the amplitude and the phase of the received signal become equal to those of the transmitted signal.

In step S9, the error correction unit 18 performs de-interleaving on the equalized signal supplied from the OFDM equalizer 33, and further performs processing such as de-puncturing, Viterbi decoding, spread signal removal, and RS decoding thereon. The error correction unit 18 then extracts the L1 information that is transmission control information from the decoded data obtained by performing various processes, and supplies the L1 information to the transmission parameter interpretation unit 20 of the controller 19.

In step S10, the transmission parameter interpretation unit 20 interprets (analyzes) the L1 information and determines whether or not a notch band exists in the DVB-C2 signal being received.

If it is determined in step S10 that a notch band exists, the process proceeds to step S11, where the transmission parameter interpretation unit 20 determines whether or not the notch band is a broadband notch.

If it is determined in step S11 that the notch band is a broadband notch, the process proceeds to step S12, where the transmission parameter interpretation unit 20 sets a band-pass filter for the reception frequency band in the interference rejection filter unit 13. After the control by the transmission parameter interpretation unit 20, the interference rejection filter unit 13 operates as the band-pass filter that allows a signal in the reception frequency band to pass therethrough.

If it is determined in step S11 that the notch band is not a broadband notch, that is, the notch band is a narrowband notch, the process proceeds to step S13, where the transmission parameter interpretation unit 20 sets a notch filter (band limiting filter) for the notch band in the interference rejection filter unit 13. After the control by the transmission parameter interpretation unit 20, the interference rejection filter unit 13 operates as the notch filter that suppresses a signal in the notch band.

When a given filter is set in the interference rejection filter unit 13 as a result of step S12 or S13, the process is terminated.

If it is determined in step S10 that no notch band exists, the process is also terminated. Even if it is determined that no notch band exists, a band-pass filter for the reception frequency band may be set in the interference rejection filter unit 13 as in the case where a broadband notch exists.

### [Reception Process]

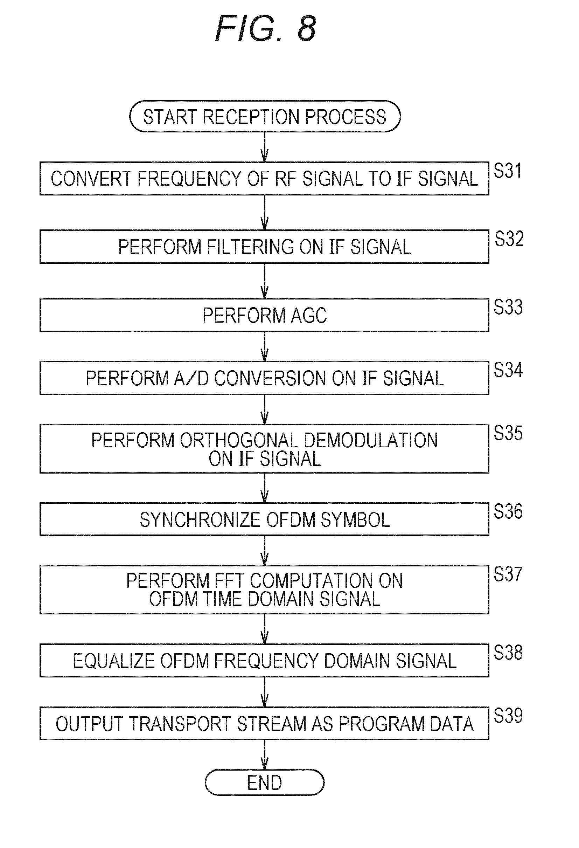

A reception process performed by the reception device 1 after the process of Fig. 7 will be described with reference to the flowchart of Fig. 8.

First, in step S31, the tuner 12 converts the frequency of the RF signal received by the antenna 11 to obtain an IF signal and outputs the IF signal.

In step S32, the interference rejection filter unit 13 performs filtering on the IF signal from the tuner 12 on the basis of the filter setting resulting from the notch band adaptive filter setting process of Fig. 7.

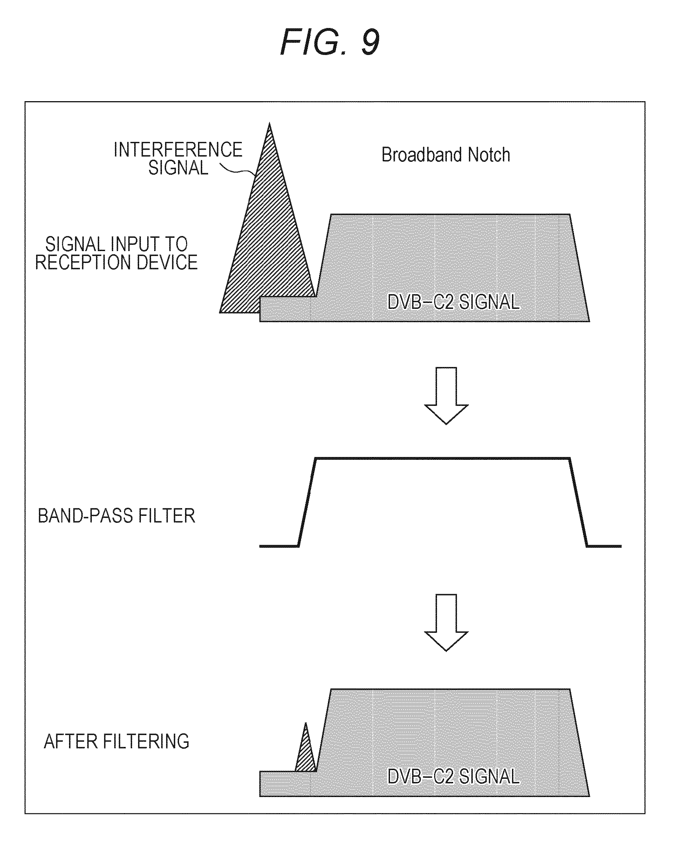

Fig. 9 is a diagram showing the filtering performed by the interference rejection filter unit 13 in a case where a broadband notch exists in the DVB-C2 signal and a band-pass filter is set in the interference rejection filter unit 13.

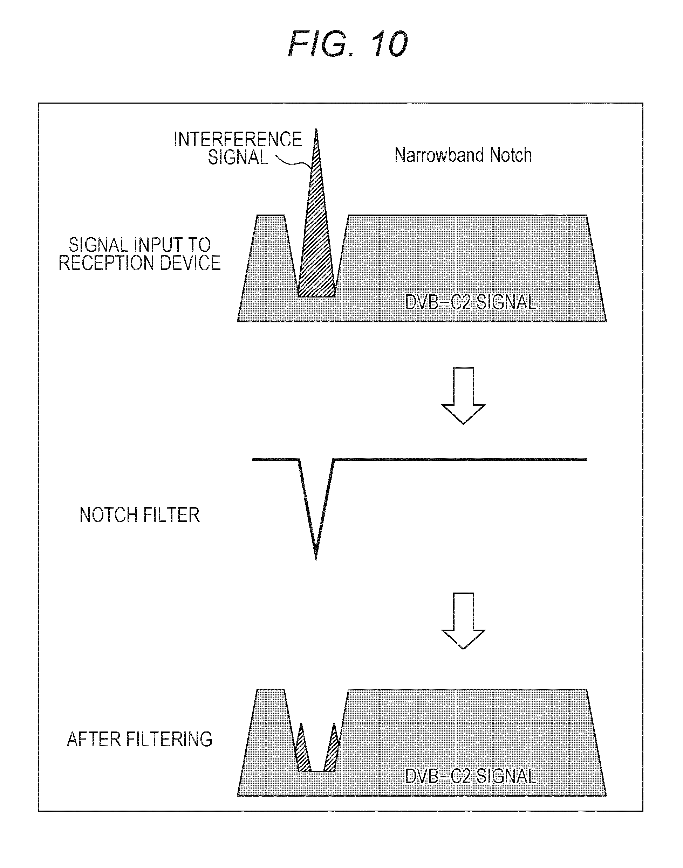

Trapezoidal and triangular waveforms in Fig. 9 schematically represent frequency spectra of the DVB-C2 signal and an interference signal shown in Fig. 5 (the same applies to Fig. 10 to be described below).

As shown in Fig. 9, even when a broadband notch exists adjacent to the reception frequency band, the interference rejection filter unit 13 can output the DVB-C2 signal to the AGC unit 14 in a state in which interference signals are suppressed because the interference rejection filter unit 13 operates as a band-pass filter that allows the DVB-C2 signal in the reception frequency band to pass therethrough. Note that a low-pass filter or a high-pass filter may be employed instead of the band-pass filter depending on the relation between the notch band and the reception frequency band as long as the filter has a characteristic that suppresses a signal in the notch band and allows the DVB-C2 signal in the reception frequency band to pass therethrough.

Fig. 10 is a diagram showing the filtering performed by the interference rejection filter unit 13 in a case where a narrowband notch exists in the DVB-C2 signal and a notch filter is set in the interference rejection filter unit 13.

As shown in Fig. 10, even when a narrowband notch exists in the reception frequency band, the interference rejection filter unit 13 can output the DVB-C2 signal to the AGC unit 14 in a state in which interference signals are suppressed because the interference rejection filter unit 13 operates as a notch filter that suppresses signals in the notch band within the reception frequency band.

Referring back to Fig. 8, in step S33, the AGC unit 14 performs AGC on the IF signal resulting from the filtering.

In step S34, the A/D converter 15 performs A/D conversion on the IF signal from the AGC unit 14, and outputs the digital IF signal to the orthogonal demodulator 16.

In step S35, the orthogonal demodulator 16 performs orthogonal demodulation on the IF signal from the A/D converter 15 by using a carrier having a predetermined frequency, and outputs the OFDM time domain signal to the OFDM demodulator 17.

In step S36, the synchronizer 31 of the OFDM demodulator 17 synchronizes the OFDM symbol.

In step S37, the FFT computing unit 32 performs FFT computation on the OFDM time domain signal of the FFT interval.

In step S38, the OFDM equalizer 33 equalizes the OFDM frequency domain signal resulting from the FFT computation.

In step S39, the error correction unit 18 performs de-interleaving on the equalized signal supplied from the OFDM equalizer 33, and further performs processing such as de-puncturing, Viterbi decoding, spread signal removal, and RS decoding thereon. The error correction unit 18 then outputs the transport stream obtained by performing various processes, the transport stream being program data corresponding to the receiving channel, to an external output unit or an output buffer downstream thereof, and terminates the process.

As described above, in the reception process performed by the reception device 1, the interference rejection filter unit 13 always performs filtering according to the filter setting resulting from the notch band adaptive filter setting process.

As a result, the DVB-C2 signal in a state in which interference signals are suppressed can be supplied to the AGC unit 14 of the interference rejection filter unit 13.

While the interference rejection filter unit 13 is arranged before the AGC unit 14 in the example of Fig. 1, the interference rejection filter unit 13 only needs to be arranged at least upstream of the FFT computing unit 32 and may be before the synchronizer 31 or the FFT computing unit 32, for example. The DVB-C2 signal output to downstream of the position where the interference rejection filter unit 13 is arranged is in a state in which possible undesirable influence of interference signals on the reception frequency band (desired signal band) is suppressed, which results in improvement in the reception performance of the reception device 1.

Arrangement of the interference rejection filter unit 13 upstream of the AGC unit 14 allows suppression of the deviation in the amplitude of the signal desired to be received due to the deviation in the AGC caused by fluctuation of the interference signal power.

Arrangement of the interference rejection filter unit 13 upstream of the FFT computing unit 32 allows suppression of degradation in quantization accuracy caused by deviation in the signal power to a specific frequency range. Furthermore, this can prevent spreading of clipping errors in the FFT due to the deviation in the signal power to a specific frequency and suppress the influence on the signal desired to be received.

### [Another Example of Reception Process]

Next, another example of the reception process performed by the reception device 1 will be described.

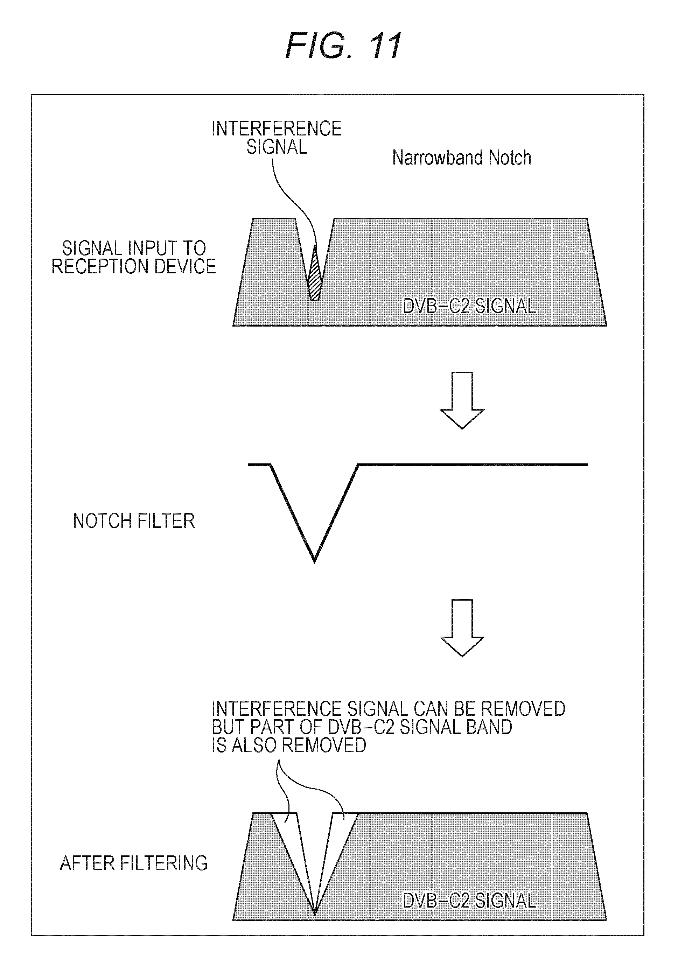

Fig. 11 shows an example in which a narrowband notch exists in the reception frequency band and the interference rejection filter unit 13 performs filtering as a notch filter.

Unlike the example shown in Fig. 10, when the signal level of an interference signal is low as shown in Fig. 11, the influence of attenuation of the DVB-C2 signal as a result of filtering may be larger than that of interference rejection using the notch filter and the reception performance may be degraded as a whole.

In Fig. 11, triangles shown in white in a waveform after filtering correspond to the attenuation of the DVB-C2 signal resulting from the filtering.

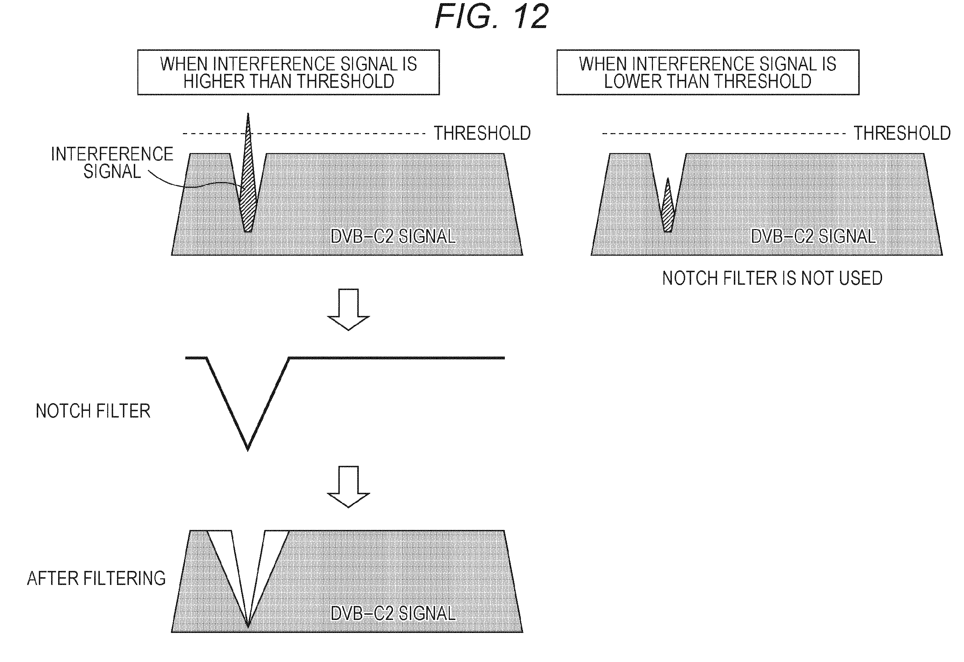

Accordingly, in a second reception process that is another example of the reception process performed by the reception device 1, the process shown in Fig. 12 is performed.

The interference rejection filter unit 13 detects the signal level (peak power level) of an interference signal in a notch band. If the signal level of the interference signal in the notch band is higher than a predetermined threshold set in advance, the interference rejection filter unit 13 then performs filtering using the notch filter that suppresses the interference signal in the notch band as described above.

If the signal level of the interference signal in the notch band is equal to or lower than the predetermined threshold set in advance, the interference rejection filter unit 13 does not perform filtering by the notch filter and outputs the input IF signal without any change to the AGC unit 14. Note that, in the case of a broadband notch, filtering using the band-pass filter is always performed similarly to the first reception process described above.

### [Reception Process]

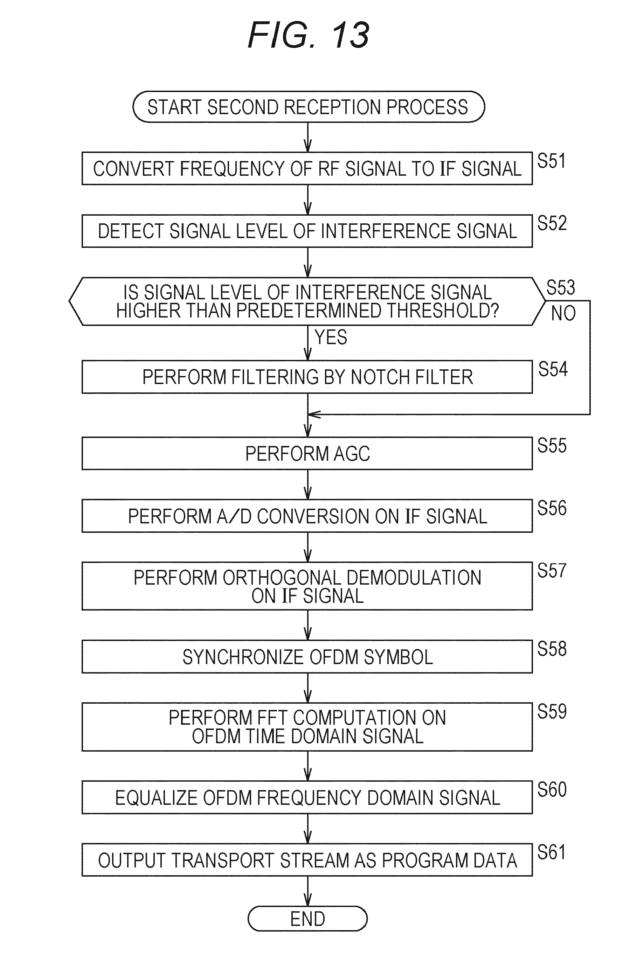

Fig. 13 is a flowchart for explaining the second reception process described with reference to Figs. 11 and 12. In the process of Fig. 13, it is assumed that a notch filter for the narrowband notch is set in the interference rejection filter unit 13 by the notch band adaptive filter setting process of Fig. 7.

First, in step S51, the tuner 12 converts the frequency of the RF signal received by the antenna 11 to obtain an IF signal and outputs the IF signal.

In step S52, the interference rejection filter unit 13 detects the signal level (peak power level) of the interference signal in the notch band.

In step S53, the interference rejection filter unit 13 then determines whether the signal level (peak power level) of the interference signal in the notch band is higher than the predetermined threshold set in advance.

If it is determined in step S53 that the signal level of the interference signal in the notch band is higher than the predetermined threshold set in advance, the process proceeds to step S54, where the interference rejection filter unit 13 performs filtering using the notch filter on the IF signal from the tuner 12.

If it is determined in step S53 that the signal level of the interference signal in the notch band is equal to or lower than the predetermined threshold set in advance, the processing in step S54 described above is skipped.

Since subsequent processing in steps S55 to S61 is the same as that in steps S33 to S39 of Fig. 8 described above, the description thereof will not be repeated.

As described above, in the second reception process performed by the reception device 1, in the case where a notch filter is set in the interference rejection filter unit 13, filtering is performed only when the signal level (peak power level of an interference signal in a notch band is higher than the predetermined threshold set in advance.

As a result, when the signal level of an interference signal is high, the effect of interference rejection using the notch filter is greater than the influence of attenuation of the DVB-C2 signal due to filtering. When the signal level of an interference signal is low, on the other hand, filtering using the notch filter will not be performed because the influence of attenuation of the DVB-C2 due to filtering will be greater than the effect of interference rejection using the notch filter. It is therefore possible to reduce degradation in the reception performance and improve the reception performance of the reception device 1 as a whole.

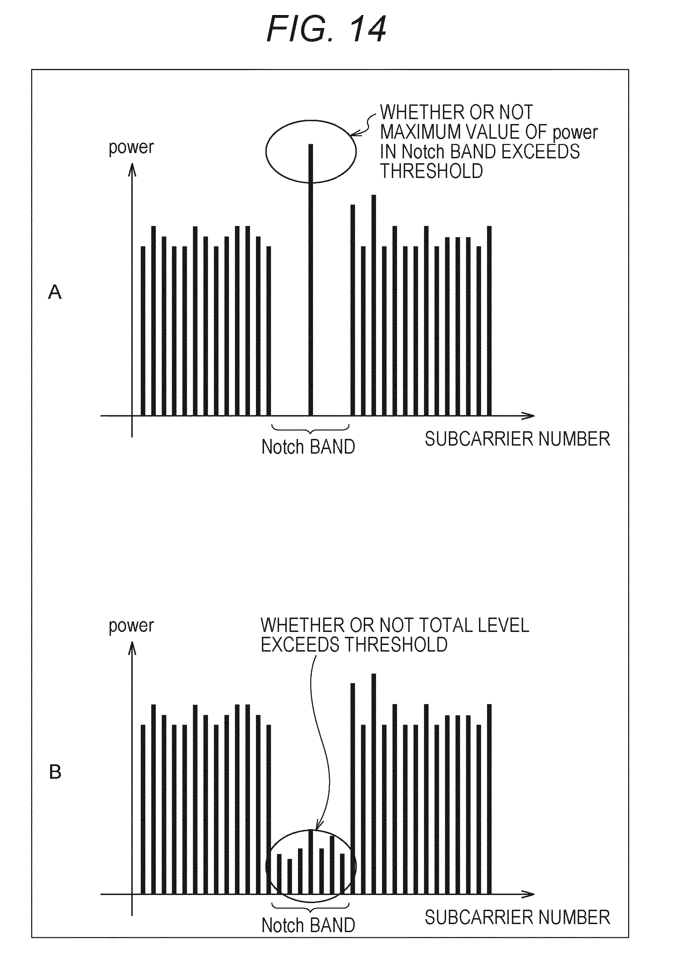

Note that, in the second reception process described above, it is determined whether or not to perform filtering using the notch filter depending on whether or not the peak value of the signal level of an interference signal in a notch band exceeds a predetermined threshold set in advance as shown in A of Fig. 14.

It may be determined, however, whether or not to perform filtering using the notch filter depending on whether or not the total of signal levels of interference signals in a notch band exceeds a predetermined threshold set in advance as shown in B of Fig. 14.

### [Example Structure of Computer]

The series of processes described above can be performed either by hardware or by software. When the series of processes described above is performed by software, programs constituting the software are installed in a computer. Note that examples of the computer include a computer embedded in dedicated hardware and a general-purpose personal computer capable of executing various functions by installing various programs therein.

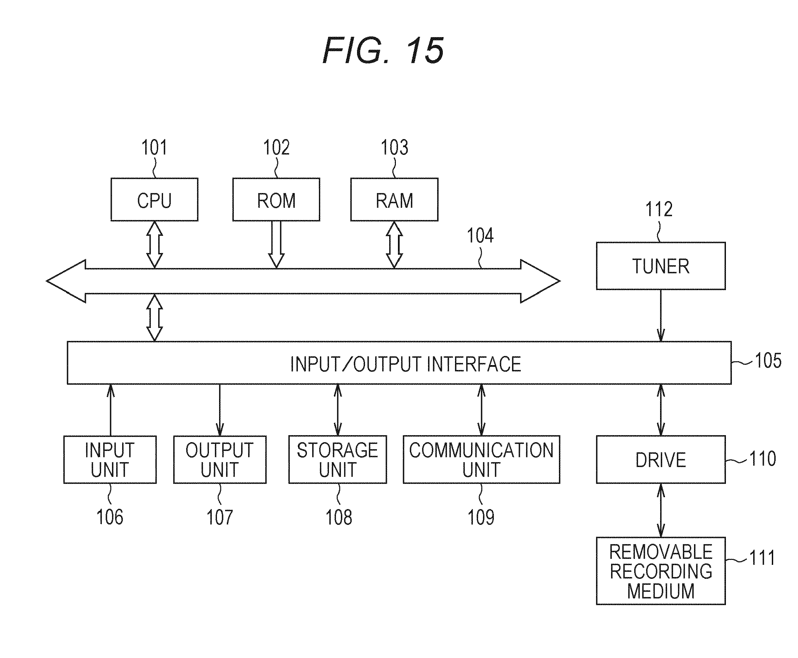

Fig. 15 is a block diagram showing an example structure of the hardware of a computer that performs the above described series of processes in accordance with programs.

In the computer, a CPU (central processing unit) 101, a ROM (read only memory) 102, and a RAM (random access memory) 103 are connected to one another by a bus 104.

An input/output interface 105 is further connected to the bus 104. An input unit 106, an output unit 107, a storage unit 108, a communication unit 109, a drive 110, and a tuner 112 are connected to the input/output interface 105.

The input unit 106 includes a keyboard, a mouse, a microphone, and the like. The output unit 107 includes a display, a speaker, and the like. The storage unit 108 may be a hard disk, a nonvolatile memory, or the like. The communication unit 109 may be a network interface or the like. The drive 110 drives a removable recording medium 111 such as a magnetic disk, an optical disk, a magnetooptical disk, or a semiconductor memory.

The tuner 112 receives a broadcast wave of an OFDM signal via an antenna that is not shown or the communication unit 109 and outputs an IF signal in a reception frequency band similarly to the tuner 12 in Fig. 1.

In the computer having the above described structure, the CPU 101 loads a program stored in the storage unit 108 into the RAM 103 via the input/output interface 105 and the bus 104 and executes the program, for example, so that the above described series of processes are performed.

In the computer, the programs can be installed in the storage unit 108 via the input/output interface 105 by mounting the removable recording medium 111 on the drive 110. Alternatively, the programs can be received by the communication unit 109 via a wired or wireless transmission medium such as a local area network, the Internet, or digital satellite broadcasting, and installed in the storage unit 108. Still alternatively, the programs can be installed in advance in the ROM 102 or the storage unit 108.

The programs to be executed by the computer may be programs for carrying out processes in chronological order in accordance with the sequence described in this specification, or programs for carrying out processes in parallel or at necessary timing such as in response to a call.

Embodiments of the present technology are not limited to the embodiments described above, but various modifications may be made thereto without departing from the scope of the technology.

While examples of the reception device 1 that receives DVB-C2 signals are described in the embodiments described above, the present technology can be applied to any reception device that receives a signal where a frequency band in which the signal is not transmitted becomes known by acquiring transmitted control information.

The present technology can also have the following structures.
(1)
   A reception device including: an acquiring unit configured to acquire band information indicating a "no signal" band contained in transmitted control information; and a filtering unit configured to perform filtering when at least a signal with a level higher than a predetermined level is detected on the basis of the band information.
(2)
   The reception device described in (1), wherein the filtering unit always performs filtering on the basis of the band information.
(3)
   The reception device described in (1), wherein the filtering unit performs filtering only when a signal with a level higher than a predetermined level is detected on the basis of the band information.
(4)
   The reception device described in (1), wherein there are at least two types of bandwidth of the band indicated by the band information, the types being a narrowband smaller than a predetermined bandwidth and a broadband equal to or larger than the predetermined band.
(5)
   The reception device described in (4), wherein the filtering unit always performs filtering when the bandwidth of the band indicated by the band information is information on the broadband.
(6)
   The reception device described in (5), wherein the filtering unit always performs filtering also when the bandwidth of the band indicated by the band information is information on the narrowband.
(7)
   The reception device described in any one of (1) to (6), wherein the reception device receives a transmitted OFDM signal according to DVB-C2, and the control information is L1 information of DVB-C2.
(8)
   The reception device described in any one of (1) to (7), wherein the filtering unit is arranged upstream of an FFT computing unit configured to convert an OFDM signal in time domain to an OFDM signal in frequency domain.
(9)
   The reception device described in (8), wherein the filtering unit is arranged before the FFT computing unit.
(10)
   The reception device described in (8), wherein the filtering unit is arranged before an AGC unit configured to perform gain control on an IF signal.
(11)
   A reception method for a reception device, including: acquiring band information indicating a "no signal" band contained in transmitted control information; and performing filtering when at least a signal with a level higher than a predetermined level is detected on the basis of the band information.
(12)
   A program causing a computer to function as: an acquiring unit configured to acquire band information indicating a "no signal" band contained in transmitted control information; and a filtering unit configured to perform filtering when at least a signal with a level higher than a predetermined level is detected on the basis of the band information.

### REFERENCE SIGNS LIST

1 reception device, 13 interference rejection filter unit, 14 AGC unit, 17 OFDM demodulator, 18 error correction unit, 19 controller, 20 transmission parameter interpretation unit, 31 synchronizer, 32 FFT computing unit, 33 OFDM equalizer

## Claims

1. A reception device comprising:
an acquiring unit configured to acquire band information indicating a "no signal" band contained in transmitted control information; and
a filtering unit configured to perform filtering when at least a signal with a level higher than a predetermined level is detected on the basis of the band information.

2. The reception device according to claim 1, wherein the filtering unit always performs filtering on the basis of the band information.

3. The reception device according to claim 1, wherein the filtering unit performs filtering only when a signal with a level higher than a predetermined level is detected on the basis of the band information.

4. The reception device according to claim 1, wherein there are at least two types of bandwidth of the band indicated by the band information, the types being a narrowband smaller than a predetermined bandwidth and a broadband equal to or larger than the predetermined band.

5. The reception device according to claim 4, wherein the filtering unit always performs filtering when the bandwidth of the band indicated by the band information is information on the broadband.

6. The reception device according to claim 5, wherein the filtering unit always performs filtering also when the bandwidth of the band indicated by the band information is information on the narrowband.

7. The reception device according to claim 1, wherein the reception device receives a transmitted OFDM signal according to DVB-C2, and the control information is L1 information of DVB-C2.

8. The reception device according to claim 1, wherein the filtering unit is arranged upstream of an FFT computing unit configured to convert an OFDM signal in time domain to an OFDM signal in frequency domain.

9. The reception device according to claim 8, wherein the filtering unit is arranged before the FFT computing unit.

10. The reception device according to claim 8, wherein the filtering unit is arranged before an AGC unit configured to perform gain control on an IF signal.

11. A reception method for a reception device, comprising:
acquiring band information indicating a "no signal" band contained in transmitted control information; and
performing filtering when at least a signal with a level higher than a predetermined level is detected on the basis of the band information.

12. A program causing a computer to function as:
an acquiring unit configured to acquire band information indicating a "no signal" band contained in transmitted control information; and
a filtering unit configured to perform filtering when at least a signal with a level higher than a predetermined level is detected on the basis of the band information.
